Europäisches Patentamt

European Patent Office

Office européen des brevets

(19)

(11) Veröffentlichungsnummer: **0 145 703**
**B1**

(12) **EUROPÄISCHE PATENTSCHRIFT**

(45) Veröffentlichungstag der Patentschrift:
02.06.89

(21) Anmeldenummer: 84890222.7

(22) Anmeldetag: 21.11.84

(51) Int. Cl.⁴: **B 23 B 3/16**, B 23 Q 3/157

(54) Querschlitten für eine Drehmaschine.

(30) Priorität: 01.12.83 AT 4193/83

(43) Veröffentlichungstag der Anmeldung:
19.06.85 Patentblatt 85/25

(45) Bekanntmachung des Hinweises auf die Patenterteilung:
02.06.89 Patentblatt 89/31

(84) Benannte Vertragsstaaten:
BE CH DE FR GB IT LI LU NL SE

(56) Entgegenhaltungen:
DE-A-1 602 902
DE-A-2 049 708
FR-A-2 492 292

PATENT ABSTRACTS OF JAPAN, Band 4, Nr. 99 (M-21) 581 , 16. Juli 1980; & JP-A-55 58 940 (HITACHI SEIKI K.K.) 02-05-1980

(73) Patentinhaber: VOEST- ALPINE Aktiengesellschaft, Muldenstrasse 5, A-4020 Linz (AT)

(72) Erfinder: Der Erfinder hat auf seine Nennung verzichtet

(74) Vertreter: Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)

EP 0 145 703 B1

## Beschreibung

Die Erfindung bezieht sich auf einen Querschlitten für eine Drehmaschine mit einem Werkzeugkopf, der aus einer in einem Gehäuse drehbar gelagerten, eine Aufnahme für ein rotierendes Werkzeug tragenden Werkzeugspindel besteht, die über ein Winkelgetriebe mit einer zur Werkzeugspindel senkrechten Antriebsspindel antriebsverbunden ist, wobei das Gehäuse des Werkzeugkopfes um die senkrecht zur Maschinenlängsachse verlaufende Antriebsspindel schwenkverstellbar in einem Grundkörper gelagert und in der jeweiligen Schwenkstellung gegenüber dem Grundkörper durch eine Klemmeinrichtung festlegbar ist.

Um ein Werkstück auf einer Drehmaschine auch mit einem rotierenden Werkzeug, beispielsweise einem Bohr- oder Fräswerkzeug, bearbeiten zu können, ist es Bekannt DE-A-3 141 657, einen Querschlitten, der selbst auf einem parallel zu der durch den Spindelkasten und den Reitstock bestimmten Maschinenlängsachse verfahrbaren Längsschlitten verschiebbar gelagert ist, mit einem Werkzeugkopf auszurüsten, der aus einem Gehäuse und einer in dem Gehäuse gelagerten, angetriebenen Werzeugspindel besteht. Damit das rotierende Werkzeug nicht nur über den Längs- und Querschlitten in einer Längs- und Querachse verstellt werden kann, wird das Gehäuse um eine zur Werzeugspindel parallele Achse drehverstellbar in einem Grundkörper gehalten, in dem die senkrecht zur Werkzeugspindel verlaufende Antriebsspindel gelagert ist, die mit der Werkzeugspindel über ein Winkelgetriebe in Antriebsverbindung steht, das auf eine zur Schwenkachse des Werkzeugkopfes koaxiale Welle wirkt. Obwohl durch die zusätzliche Verstellmöglichkeit des Werzeugkopfes eine von den Werkzeugabmessungen unabhängige Bearbeitung insbesondere von Paßfedernuten erreicht werden kann, bleiben die Bearbeitungsmöglichkeiten des Werkstückes mit dem eingesetzten Bohr- oder Fräs-Werkzeug beschränkt, weil die Ausrichtung der Werkzeugachse gegenüber der Maschinenlängsachseunveränderbar vorgegeben ist. Diese bekannten Werkzeugköper werden daher auch lediglich im Zusammenhang mit Revolverköpfen eingesetzt, der Drehachse parallel zur Maschinenlängsachse und zur Antriebsspindel für den Werkzeugkopf ausgerichtet ist. Die Schwenkverstellung des Werkzeugkopfes wird bei diesen bekannten Querschlitten durch einen gesonderten Antrieb durchgeführt, der den Konstruktionsaufwand naturgemäß erheblich vergrößert.

Schließlich ist es bei einer Karussell-Werkzeugmaschine bekannt (DE-A-1 602 902), einen Revolverkopf mit einer in einem Gehäuse drehbar gelagerten, eine Aufnahme für ein rotierendes Werkzeug tragenden Werkzeugspindel vorzusehen, die über ein Winkelgetriebe mit einer zur Werkzeugspindel senkrechten Antriebsspindel antriebsverbunden ist. Das Gehäuse des Revolverkopfes ist außerdem um die Antriebsspindel schwenkverstellbar in einem Grundkörper gelagert und kann in der jeweiligen Schwenkstellung gegenüber dem Grundkörper mit Hilfe einer Klemmeinrichtung festgelegt werden. Zur Verstellung des Revolverkopfes ist ein gesonderter Antrieb vorgesehen, der über Stirnräder das Gehäuse des Revolverkopfes antreibt. Dieser gesonderte Antrieb stellt jedoch einen erheblichen Konstruktionsaufwand dar, der neben dem Antrieb für die Antriebsspindel auf dem den Revolverkopf tragenden Schlitten untergebracht werden muß.

Der Erfindung liegt somit die Aufgabe zugrunde, einen Querschlitten für eine Drehmaschine der eingangs geschilderten Art so zu verbessern, daß unter Beibehaltung der vielfältigen Bearbeitungsmöglichkeiten eines Werkstückes durch das Vorsehen entsprechender Einstellachsen für den Werkzeugkopf dessen Verstellung mit einem möglichst geringen Konstruktionsaufwand genau durchgeführt werden kann.

Die Erfindung löst die gestellte Aufgabe dadurch, daß das Gehäuse des Werkzeugkopfes mit der Werkzeugspindel über einen gegenüber der Werkzeugspindel radial verstellbaren Kupplungsstift drehfest kuppelbar ist, für den in der Werkzeugspindel oder in einem mit der Werkzeugspindel drehfest verbundenen Teil eine Aufnahmeausnehmung vorgesehen ist.

Da das Gehäuse mit der Antriebsspindel oder der Werkzeugspindel drehfest gekuppelt werden kann, kann die Drehverstellung des Gehäuses gegenüber dem es aufnehmenden Grundkörper über die Antriebsspindel selbst erfolgen, so daß sich ein gesonderter Stellantrieb erübrigt. Die Kupplung zwischen dem Gehäuse des Werkzeugkopfes und der Werkzeug- bzw. Antriebsspindel muß während des Werkzeugantriebes selbstverständlich gelöst und das Gehäuse drehfest mit dem Lagerkörper verbunden werden, und zwar unter der Voraussetzung, daß die Drehstellung der Antriebs- bzw. der Werkzeugspindel einerseits und des Gehäuses anderseits beispielsweise für eine numerische Steuerung genau erfaßt werden kann. Zu diesem Zweck trägt das Gehäuse des Werkzeugkopfes einen gegenüber der Werkzeugspindel radial verstellbaren Kupplungsstift, für den in der Werkzeugspindel oder in einem mit der Werkzeugspindel drehfest verbundenen Teil eine Aufnahmeausnehmung vorgesehen ist. Greift der Kupplungsstift, der vorteilhaft über einen Zylinder verstellt werden kann, in die Aufnahmeausnehmung der Werkzeugspindel oder eines mit ihr drehfest verbundenen Teiles ein, so braucht lediglich die Drehverbindung zwischen dem Gehäuse und dem Lagerkörper gelöst zu werden, um über den Werkzeugspindelantrieb den Werkzeugkopf in die gewünschte Drehstellung zu bringen, in der das Gehäuse wieder mit dem Lagerkörper verbunden wird, bevor der Kupplungsstift aus der Aufnahmeausnehmung herausgezogen wird. Zur drehfesten Verbindung zwischen dem Gehäuse und dem Lagerkörper kann für bevorzugte Drehstellungen eine formschlüssige und für Zwischenstellungen eine kraftschlüssige Kupplung vorgesehen sein.

Für diese kraftschlüssige Kupplung kann das Gehäuse des Werkzeugkopf es mit einem konischen Klemmansatz in eine entsprechende Lagerausnehmung des Grundkörpers eingreifen und durch einen Ringkolben im Klemmsinn axial beaufschlagt werden, so daß sich bei einer solchen axialen Klemmbeaufschlagung keine Ungenauigkeiten durch Spiele in Umfangsrichtung ergeben können.

Besteht die Antriebsspindel aus zwei miteinander drehfest verbundenen, aber gegeneinander längsverschiebbaren Teilen und ist der Grundkörper als in Richtung der Antriebsspindel verstellbarer Werkzeugschlitten ausgebildet, so wird eine zusätzliche Einstellmöglichkeit für den Werkzeugkopf erhalten, ohne den Konstruktionsaufwand wesentlich erhöhen zu müssen. Mit dem Werkzeugschlitten wird ja auch der Werkzeugkopf in Richtung der Antriebsspindel und folglich das rotierende Werkzeug quer zu seiner Rotationsachse verstellt.

In der Zeichnung ist der Erfindungsgegenstand beispielsweise dargestellt. Es zeigen

Fig. 1 einen erfindungsgemäßen Querschlitten einer Drehmaschinein einer schematischen Vorderansicht,

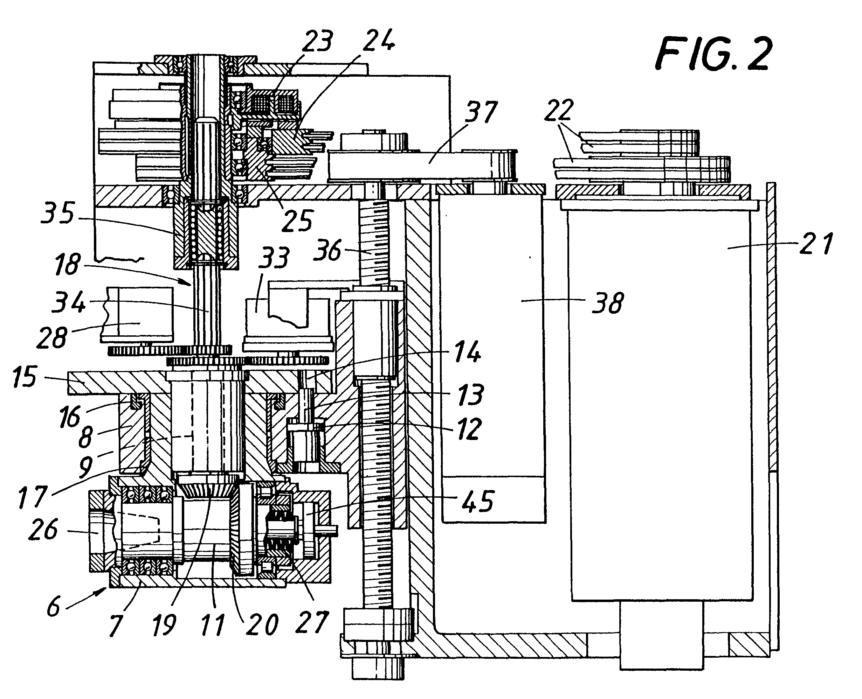

Fig. 2 einen Schnitt nach der Linie II - II der Fig. 1 in einem größeren Maßstab und
Fig. 3 einen Querschnitt durch den Werkzeugkopf im Bereich der Kupplungseinrichtung zwischen dem Gehäuse des Werkzeugkopfes und der Werkzeugspindel.

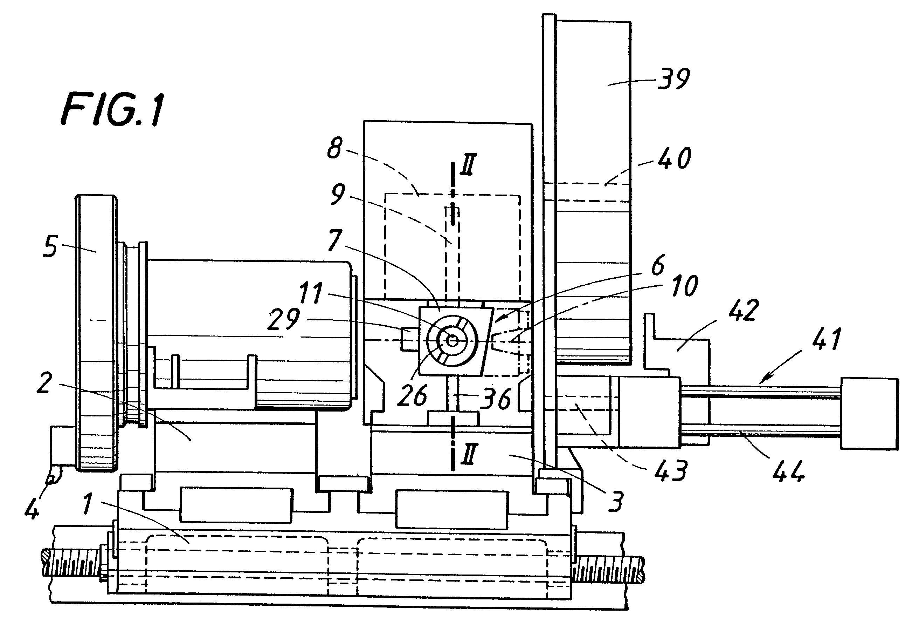

Wie die Fig. 1 erkennen läßt, sind auf einem Längsschlitten 1 einer Drehmaschine zwei Querschlitten 2 und 3 in Flachbettführungen verschiebbar gelagert, wobei der Querschlitten 2 einen mit Drehwerkzeugen 4 bestückten Revolverkopf 5 und der Querschlitten 3 einen Werkzeugkopf 6 zur Aufnahme eines rotierenden Werkzeuges, beispielsweise eines Bohr- oder Fräswerkzeuges, tragen. Damit wird es in einfacher Weise möglich, das in der Drehmaschine eingespannte Werkstück ohne Umspannen nacheinander mit Drehwerkzeugen und rotierenden Werkzeugen zu bearbeiten.

Da die Bearbeitungsmöglichkeiten insbesondere von den Einstellachsen für den Werkzeugkopf 6 bestimmt werden, kommt der Lagerung dieses Werkzeugkopfes eine besondere Bedeutung zu. Gemäß dem dargestellten Ausführungsbeispiel ist das Gehäuse 7 des Werkzeugkopfes in einem Lagerkörper 8 um eine Achse 9 schwenkverstellbar gelagert, die senkrecht zu der durch den Spindelkasten und den Reitstock der Drehmaschine bestimmten Maschinenlängsachse 10 und senkrecht zur Achse der Werkzeugspindel 11 verläuft. Aus diesem Grunde kann die Werkzeugspindel 11 durch ein Verschwenken des Gehäuses 7 im Grundkörper 8 zwischen einer zur Maschinenlängsachse 10 senkrechten Grundstellung, wie sie in Fig. 1 angedeutet ist, und einer zur Maschinenlängsachse 10 parallelen Grundstellung beliebig verstellt werden, was die unterschiedlichsten Bearbeitungsmöglichkeiten sicherstellt. Die Grundstellungen des Gehäuses 7 gegenüber den Grundkörper 8 können durch eine formschlüssige Kupplung festgelegt werden, die aus einem von einem Kolben 12 verstellbaren Kupplungsstift 13 besteht, der in entsprechende Aufnahmeausnehmungen 14 einer mit dem Gehäuse 7 verbundenen Kupplungsscheibe 15 einführbar ist. In den Zwischenstellungen wird das Gehäuse 7 mit dem Grundkörper 8 durch einen Ringkolben 16 kraftschlüssig verbunden, wobei das Gehäuse 7 bei einer Beaufschlagung des auf die Kupplungsscheibe 15 wirkenden Ringkolbens 16 mit einem konischen Klemmansatz 17 in eine entsprechende Lagerausnehmung klemmend eingreift.

Der Antrieb der Werkzeugspindel 11 erfolgt über eine zur Achse 9 des Gehäuses 7 koaxiale Antriebsspindel 18, die über ein aus zwei Kegelrädern 19 und 20 bestehendes Winkelgetriebe mit der Werkzeugspindel 11 antriebsverbunden ist und von einem Gleichstrommotor 21 über ein zweistufiges Keilriemengetriebe 22 angetrieben werden kann. Zum Umschalten des Keilriemengetriebes 22 dient eine elektromagnetische Kupplung 23, die wahlweise eines der beiden Keilriemenräder 24 oder 25 mit der Antriebsspindel 18 kuppelt. Das verwendete Bohr- oder Fräswerkzeug, das in eine Aufnahme 26 der Werkzeugspindel 11 eingesetzt und durch ein Tellerfederpaket 27 gespannt wird, kann somit über den Gleichstrommotor 21 angetrieben werden. Da für einen maschinellen Werkzeugwechsel die Aufnahme 26 gegenüber dem einzusetzenden Werkzeug in ihrer Drehlage ausgerichtet sein muß, wird die Drehlage der Werkzeugspindel 11 über einen Winkelgeber 28 angezeigt, der den Drehwinkel über die Antriebsspindel 18 mit Hilfe eines Übersetzungsgetriebes abgreift, dessen Übersetzungsverhältnis dem Übersetzungsverhältnis der Kegelräder 19 und 20 des Winkelgetriebes zwischen der Antriebsspindel 18 und der Werkzeugspindel 11 entspricht.

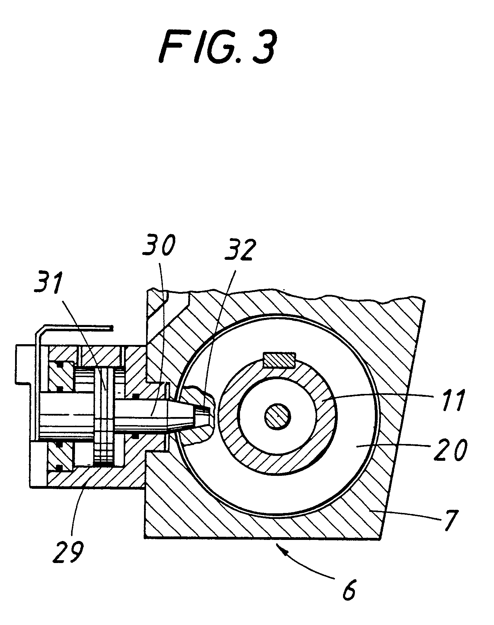

Die Schwenkverstellung des Gehäuses 7 gegenüber dem Grundkörper 8 erfolgt ebenfalls über die Antriebsspindel 18. Zu diesem Zweck trägt das Gehäuse 7 gemäß Fig. 3 eine Kupplungseinrichtung 29, mit deren Hilfe das Gehäuse 7 mit der Werkzeugspindel 11 drehfest verbunden werden kann. Mit einem bezüglich der Werkzeugspindel 11 radialen Kupplungsstift 30, der von einem Kolben 31 beaufschlagt wird, kann diese drehfeste Verbindung einfach hergestellt werden. Der Kupplungsstift 30 braucht lediglich in eine entsprechende Aufnahmeausnehmung 32 einzugreifen, die gemäß Fig. 3 in dem Kegelrad 20 des Winkelgetriebes zwischen der Antriebsspindel 18 und der Werkzeugspindel 11 vorgesehen ist. Die für die Kupplung erforderliche Drehstellung der Werkzeugspindel 11 wird durch den Winkelgeber 28 angezeigt. Ist die drehfeste Verbindung zwischen dem Gehäuse 7 und der Werkzeugspindel 11 bzw. der Antriebsspindel 18 hergestellt, so kann nach einem Lösen der Verbindung zwischen dem Gehäuse 7 und dem Grundkörper 8 das Gehäuse 7 über die Antriebsspindel 18 in die gewünschte Drehlage verstellt werden, wobei mit Hilfe eines weiteren Winkelgebers 33 die jeweilige Drehstellung des Gehäuses 7 gegenüber dem Grundkörper 8 erfaßt wird.

Um den Werkzeugkopf 6 zusätzlich quer zur Werkzeugspindel 11 herstellen zu können, besteht die Antriebsspindel 18 aus zwei Teilen 34 und 35, die miteinander drehfest, aber axial verschiebbar verbunden sind. Dies wird nach dem Ausführungsbeispiel über Kugeln erreicht, die in axialen Keilnuten der miteinander antriebsverbundenen Teile geführt sind. Da außerdem der Grundkörper 8 als in Richtung der Antriebsspindel 18 verschiebbarer Werkzeugschlitten ausgebildet ist, wird die angestrebte zusätzliche Verstellmöglichkeit ohne Beeinträchtigung der anderen Verstellungen gewährleistet. Der einen Werkzeugschlitten bildende Grundkörper 8 kann mit Hilfe eines Spindeltriebes 36 verstellt werden, dessen Spindel über einen Zahnriementrieb 37 von einem Stellmotor 38 angetrieben wird.

Wie die Fig. 1 zeigt, kann durch ein entsprechendes Verschwenken des Werkzeugkopfes 6 in die strichpunktiert angedeutete Drehlage ein einfacher Werkzeugwechsel durchgeführt werden, wenn der Längsschlitten 1 ein Werkzeugmagazin 39 mit einer zur Maschinenlängsachse 10 parallelen Drehachse 40 und eine Werkzeugwechselvorrichtung 41 mit einem Greifer 42 trägt, der um eine zur Drehachse 40 parallele Achse 43 schwenkbar gelagert und mit Hilfe eines Stelltriebes 44 in Richtung seiner Schwenkachse 43 verstellt werden kann. Da in der strichpunktiert gezeichneten Drehstellung des Werkzeugkopfes 6 die Werkzeugspindel 11 parallel zur Drehachse 40 des Werkzeugmagazins 39 und parallel zur Schwenkachse 43 des Greifers 42 ausgerichtet ist, bedarf es lediglich einer axialen Verschiebung des Greifers 42, um das jeweilige Werkzeug in den Werkzeugkopf 6 bzw. in das Werkzeugmagazin 39 einsetzen zu können. Der Werkzeugtransport zwischen dem Werkzeugkopf 6 und dem Werkzeugmagazin 39 erfolgt über die Schwenkbewegung des Greifers 42. Zum Lösen der Werkzeugspannung in der Aufnahme 26 dient ein Kolben 45, der entgegen der Kraft des Federpaketes 27 wirkt.

**Patentansprüche**

1. Querschlitten für eine Drehmaschine mit einem Werkzeugkopf (6), der aus einer in einem Gehäuse (7) drehbar gelagerten, eine Aufnahme für ein rotierendes Werkzeug tragenden Werkzeugspindel (11) besteht, die über ein Winkelgetriebe mit einer zur Werkzeugspindel senkrechten Antriebsspindel (18) antriebsverbunden ist, wobei das Gehäuse (7) des Werkzeugkopfes (6) um die senkrecht zur Maschinenlängsachse (10) verlaufende Antriebsspindel (18) schwenkverstellbar in einem Grundkörper (8) gelagert und in der jeweiligen Schwenkstellung gegenüber dem Grundkörper (8) durch eine Klemmeinrichtung festlegbar ist, dadurch gekennzeichnet, daß das Gehäuse (7) des Werkzeugkopfes (6) mit der Werkzeugspindel (11) über einen gegenüber der Werkzeugspindel (11) radial verstellbaren Kupplungsstift (30) drehfest kuppelbar ist, für den in der Werkzeugspindel (11) oder in einem mit der Werkzeugspindel (11) drehfest verbundenen Teil (Kegelrad 20) eine Aufnahmeausnehmung (32) vorgesehen ist.

2. Querschlitten nach Anspruch 1, dadurch gekennzeichnet, daß die Antriebsspindel (18) aus zwei miteinander drehfest verbundenen, aber gegeneinander längsverschiebbaren Teilen (34, 35) besteht und daß der Grundkörper (8) als in Richtung der Antriebsspindel (18) verstellbarer Werkzeugschlitten ausgebildet ist.

3. Querschlitten nach Anspruch 1 oder 2, dadurch gekennzeichnet, daß das Gehäuse (7) des Werkzeugkopfes (6) mit einem konischen Klemmansatz (17) in eine entsprechende Lagerausnehmung des Grundkörpers (8) eingreift und durch einen Ringkolben (16) im Klemmsinn axial beaufschlagbar ist.

**Claims**

1. A cross slide for a lathe comprising a tool bead (6), which consists of a tool spindle (11), which is rotatably mounted in a housing (7) and carries a receptacle for a rotating tool and by means of an angle drive is operatively connected to a drive spindle (18), which is at right angles to the tool spindle, wherein the housing (7) of the tool head is mounted in a body (8) for an angular adjustment about the drive spindle (18), which is at right angles to the longitudinal axis (10) of the lathe and the housing (7) is adapted to be fixed by clamping means in its angular position relative to the body, characterized in that the housing (7) of the tool head (6) is adapted to be non-rotatably coupled to the tool spindle (11) by means of a coupling pin (30), which is radially adjustable relative to the tool spindle (11), and a recess (32) for receiving said coupling pin is provided in the tool spindle (11) or in a member (bevel wheel 20) that is non-rotatably connected to the tool spindle (11).

2. A cross slide according to claim 1, characterized in that the drive spindle (18) consists of two sections (34, 35), which are non-rotably interconnected but longitudinally displaceable relative to each other and the body (8) consists of a tool slide, which is adjustable along the drive spindle (18).

3. A cross slide according to claim 1 or 2, characterized in that the housing (7) of the tool head (6) has a conical clamping extension (17), which enters a corresponding bearing opening of the body (8), and annular piston (16) is provided for axially urging the housing (7) in the clamping sense.

**Revendications**

1. Chariot transversal pour un tour avec une tête (6) porte-outil qui' se compose d'une broche (11) qui, montée de manière rotative dans un boîtier (7) et portant un logement pour un outil rotatif, est reliée par une chaîne cinématique d'entraînement à une broche motrice (18) perpendiculaire à la broche porte-outil par l'intermédiaire d'une transmission à engrenage angulaire, tandis que le boîtier (7) de la tête (6) porte-outil est monté dans un corps (8) formant socle de manière à pouvoir être positionné par pivotement autour de la broche motrice (18) s'étendant perpendiculairement à l'axe longitudinal de la machine et de manière à pouvoir être immobilisé avec un dispositif de serrage dans la position de pivotement choisie dans chaque cas par rapport au corps (8) formant socle, caractérisé par le fait que le boîtier (7) de la tête (6) porte-outil peut être accouplé sans rotation réciproque a la broche (11) porte-outil par l'intermédiaire d'un téton d'accouplement (30) qui peut être repositionné dans le sens radial par rapport à la broche (11) porte-outil et pour lequel un évidement (32) formant logement est prévu dans la broche (11) porte-outil ou bien dans une pièce (roue conique) sans rotation réciproque à la broche (11) porte-outil.

2. Chariot transversal selon la revendication 1, caractérisé par le fait que la broche motrice (18) se compose de deux parties (34, 35) reliées l'une à l'autre de manière à interdire toute rotation relative entre elles, mais pouvant coulisser l'une par rapport à l'autre dans leur sens longitudinal et que le corps (8) formant socle est réalisé sous la forme d'un chariot porte-outil pouvant être déplacé dans le sens de la broche motrice (18).

3. Chariot transversal selon la revendication 1 ou 2, caractérisé par le fait que le boîtier (7) de la tête (6) porte-outil vient en prise avec un embout (17) conique de serrage dans un évidement correspondant de logement du corps (8) formant socle et peut être placé sous l'action d'un piston annulaire (16) dans le sens axial de serrage.

FIG.1

FIG.2

EP 0 145 703 B1

# FIG. 3